# EUROPÄISCHE PATENTANMELDUNG

(11) **EP 4 401 288 A1**
(43) Veröffentlichungstag der Anmeldung: **17.07.2024**
(21) Anmeldenummer: 23151664.2
(22) Anmeldetag: 16.01.2023
(51) Int. Cl.: H02K 9/22, H02K 3/34

(54) **ELEKTROMOTOR, STATOR FÜR EINEN ELEKTROMOTOR, ROTOR FÜR EINEN ELEKTROMOTOR UND HERSTELLVERFAHREN**

(71) Anmelder: Hilti Aktiengesellschaft, 9494 Schaan (LI)
(72) Erfinder: Schaefer, Thomas, 86836 Obermeitingen (DE); Hoerner, Pascal, 86150 Augsburg (DE)
(74) Vertreter: Hilti Aktiengesellschaft Corporate Intellectual Property

(57) **Zusammenfassung**

Die vorliegende Erfindung betrifft einen Elektromotor (10), insbesondere für eine Werkzeugmaschine, umfassend einen Stator (1) und einen Rotor (2), wobei der Stator (1) und/oder der Rotor (2) zumindest eine Spule (12,22) aufweist, die auf einen Grundkörper (11,21) aufgewickelt ist. Zwischen dem Grundkörper (11,21) und der Spule (12,22) ist zumindest abschnittsweise ein Spulenträger (5) angeordnet, der zumindest abschnittsweise eine direkte Anlage zumindest einer Teilmenge an Stromleitern der Spule (12,22) auf dem Grundkörper (11,21) unterbindet. Zwischen dem Spulenträger (5) und dem Grundkörper (11,21) liegt zumindest abschnittsweise ein wärmeleitfähiges Material (4) vor. Ferner betrifft die vorliegende Erfindung einen Stator (1) sowie einen Rotor (2) für einen solchen Elektromotor (1) und ein Herstellverfahren.

## Beschreibung

Die vorliegende Erfindung betrifft einen Elektromotor, insbesondere für eine Werkzeugmaschine, einen Stator für einen solchen Elektromotor, einen Rotor für einen solchen Elektromotor und ein Herstellverfahren für den Stator sowie den Rotor.

Elektromotoren jedweder Bauart umfassen in deren Rotoren und/oder Statoren Spulen, die stromdurchflossene Stromleiter aufweisen, die zur Bildung der Spulen auf einen Grundkörper aufgewickelt sind. Der Grundkörper ist aus einem magnetisch wirksamen Material gebildet und weist in einem bestimmten Muster angeordnete Nuten auf, in die die Stromleiter zur Bildung der Spule gewickelt werden. Die Nuten werden durch so genannte Polschuhe bereitgestellt, die jeweils einen Polzahn sowie gegebenenfalls daran angrenzend einen Jochbereich aufweisen. Der Grundkörper eines Rotors ist hierbei in der Regel außengenutet, d.h. die Spule wird von außen aufgewickelt, und der Grundkörper eines Stators in der Regel innengenutet, d.h. die Spule wird von innen aufgewickelt. Zwischen dem Grundkörper und den die Spule bildenden Stromleitern befindet sich häufig ein so genannter Spulenträger, der eine unmittelbare Anlage der Stromleiter der Spule auf dem Grundkörper unterbindet und in der Regel elektrisch isolierend ist.

Verschiedene Bauformen derartiger Spulenträger sind beispielsweise aus US 4,161,669 A, EP 2 936 655 B1 und EP 1 467 466 A2 bekannt.

Um möglichst robuste Statoren bzw. Rotoren zu erhalten, ist es bekannt, den Grundkörper mit bereits aufgewickelten Spulen und montierten Spulenträgern mit einem thermoplastischen Material zu umspritzen, sodass die Stromleiter der Spule sowohl gegen den Einfluss von Vibrationen als auch gegen Feuchtigkeit geschützt sind. Dieses Verfahren ist dem Fachmann unter dem Begriff "Overmolding" geläufig.

Die Spulen erwärmen sich im Betrieb aufgrund des elektrischen Widerstands des Stromleiters, was unerwünscht ist und die Leistungsdichte der Elektromotoren begrenzt. Es sind daher im Stand der Technik verschiedene Maßnahmen bekannt, um die Wärmeabfuhr aus der Spule zu verbessern.

Insbesondere ist bekannt, die Wärmeabfuhr aus der Spule dadurch zu verbessern, dass zwischen den Stromleitern der Spule und dem Spulenträger ein wärmeleitfähiges Material angebracht wird.

So ist aus DE 10 2010 064 072 A1 ein Trägerzahn einer gewickelten Spule eines Elektromotors bekannt, bei dem zwischen einer Trägerzahnseitenfläche und den Stromleitern der Spule eine wärmeleitende Folie angebracht ist.

Ferner wird in EP 3 096 335 A1 ein Spulenwickelverfahren beschrieben, bei dem ein bereits isolierter Stromleiter mittels einer Wickelvorrichtung auf einen Spulenträger aufgewickelt wird, wobei während des Wickelvorgangs ein wärmeleitfähiges Material direkt auf den Stromleiter und/oder den Spulenträger aufgebracht wird.

Schließlich offenbart WO 2017/194444 A1 ein weiteres Spulenwickelverfahren, bei dem bereits vor dem Aufwickeln des Stromleiters ein aushärtbarer wärmeleitfähiger Polymerwerkstoff auf den Spulenträger aufgetragen wird, sodass der Stromleiter nach dem Aufwickeln wenigstens teilweise von dem Polymerwerkstoff bedeckt ist und der Stromleiter nach dem Aushärten des Polymerwerkstoff wärmeleitend an dem Spulenträger fixiert ist.

Der Stand der Technik adressiert also bereits eine Verringerung der Wärmeübergangswiderstände zwischen den Stromleitern der Spule und dem Spulenträger, nutzt das volle Optimierungspotential jedoch unvollständig, da wichtige Wärmeübergangswiderstände unbeachtet bleiben.

Daher ist es eine Aufgabe der vorliegenden Erfindung, einen Elektromotor bereitzustellen, der sich durch eine verbesserte Entwärmung der Spulen des Stators und/oder des Rotors auszeichnet und somit eine höhere Leistungsdichte aufweist.

### OFFENBARUNG DER ERFINDUNG

Demgemäß wird ein Elektromotor, insbesondere für eine Werkzeugmaschine, vorgeschlagen, der einen Stator und einen Rotor umfasst. Der Stator und/oder der Rotor weist/weisen zumindest eine Spule auf, die auf einen Grundkörper aufgewickelt ist, wobei zwischen dem Grundkörper und der Spule zumindest abschnittsweise ein Spulenträger angeordnet ist, der zumindest abschnittsweise eine direkte Anlage zumindest einer Teilmenge an Stromleitern der Spule auf dem Grundkörper unterbindet. Zwischen dem Spulenträger und dem Grundkörper liegt erfindungsgemäß zumindest abschnittsweise ein wärmeleitfähiges Material vor.

Insbesondere kann es sich bei dem Grundkörper des erfindungsgemäßen Elektromotors sowohl um einen Grundkörper des Stators als auch um einen Grundkörper des Rotors handeln. Unter einer Spule wird hierin ein Stromleiter bzw. Draht verstanden, der zu einer Wicklung aufgewickelt ist.

In Ausführungen weist der Grundkörper Nuten auf, in die die Stromleiter der Spule zur Bildung derselben gewickelt sind. Unter einem Spulenträger wird hierin sowohl ein Vorrichtungsbestandteil verstanden, der innerhalb der Nuten angeordnet ist als auch ein Vorrichtungsbestandteil, der stirnseitig an den Grundkörper angrenzt und einen sogenannten Wicklungsträger bzw. eine Endkappe bildet. In Ausführungen deckt der Spulenträger den Grundkörper im Bereich der Wicklung teilweise oder vollständig ab.

In Ausführungen können sowohl der Stator als auch der Rotor eine Spule aufweisen, sodass es sich bei dem erfindungsgemäßen Elektromotor beispielsweise um einen fremderregten Elektromotor handeln kann. In anderen Ausführungen kann der Stator bzw. Rotor zumindest einen Permanentmagnet umfassen und nur der Rotor bzw. Stator zumindest eine Spule umfassen, sodass es sich bei dem erfindungsgemäßen Elektromotor beispielsweise auch um einen permanenterregten Elektromotor handeln kann.

Das wärmeleitfähige Material bildet eine wärmeleitende Schicht zwischen dem Spulenträger und dem Grundkörper, die Luftspalte und/oder Oberflächenrauigkeiten ausfüllt und somit die Wärmeübergangswiderstände zwischen dem Spulenträger und dem Grundkörper minimiert. Mit anderen Worten bildet das wärmeleitfähige Material eine thermische Brücke zwischen dem Spulenträger und dem Grundkörper.

Die durch das wärmeleitfähige Material gebildete wärmeleitende Schicht ist vorteilhafterweise zumindest in einem Bereich vorhanden, in dem die Stromleiter der Spule auf dem Spulenträger aufliegen bzw. diesen berühren.

Besonders vorteilhaft ist es, wenn das wärmeleitfähige Material eine höhere Wärmeleitfähigkeit aufweist als der Spulenträger. Ferner hat es sich als vorteilhaft erwiesen, wenn das wärmeleitfähige Material elektrisch nicht leitfähig ist.

Anders als bei dem aus dem Stand der Technik bekannten Overmolding-Verfahren überbrückt das wärmeleitfähige Material bei dem erfindungsgemäßen Elektromotor einen thermisch schlecht leitenden Spalt zwischen Spulenträger und Grundkörper zuverlässig. Vom Overmolding-Verfahren hingegen wird dieser Spalt nicht adressiert, da kein schmelzflüssiges Kunststoffmaterial in diesen eindringen kann.

Der vorgeschlagene Elektromotor weist eine optimierte Entwärmung der Spulen des Stators und/oder des Rotors auf, da ein im Stand der Technik bisher nicht beachteter Wärmeübergangswiderstand, nämlich zwischen dem Spulenträger und dem Grundkörper, signifikant verringert wird. Hierdurch kann die Leistungsdichte des Elektromotors deutlich erhöht werden und/oder eine technisch weniger aufwändige Kühlung eingesetzt werden.

Der vorgeschlagene Elektromotor kann beispielsweise mit Netzspannung (110V bis 500V) oder mit Niederspannung (kleiner als 50V) betrieben werden.

In Ausführungen kann zwischen der Spule und dem Spulenträger eine lose Isolation angeordnet sein, jedoch ist es auch möglich, dass zwischen der Spule und dem Spulenträger keine Isolation vorgesehen ist. Alternativ oder zusätzlich kann zwischen dem Grundkörper und dem Spulenträger eine feste Isolation angeordnet sein.

In Ausführungen kann der Grundkörper ein magnetisch wirksames Material, insbesondere ein Metall oder eine Metalllegierung, insbesondere eine Eisenbasislegierung, aufweisen oder daraus bestehen. Mit anderen Worten kann der Grundkörper daher auch als magnetisch wirksamer Körper bezeichnet werden. Als Werkstoffe für den Grundkörper eignen sich insbesondere Metalle oder Metalllegierungen mit einer hohen magnetischen Permeabilität. Die Auswahl eines geeigneten Werkstoffs für den Grundkörper kann vom Fachmann anhand seines Fachwissens vorgenommen werden.

In Ausführungen kann der Grundkörper eine Mehrzahl an gestapelten Einzellagen, insbesondere Blechstücke, umfassen, die insbesondere ein Blechpaket bilden. Die Dicke der Einzellagen bzw. Blechstücke kann in Ausführungen 0,3 mm bis 0,5 mm betragen. Die Einzellagen, insbesondere Blechstücke, können miteinander beispielsweise durch Stanzpakettieren oder Schweißen verbunden sein. In Ausführungen können die Einzellagen bzw. Blechstücke gegeneinander isoliert sein. Die Einzellagen bzw. Blechstücke sind zur Bildung des Grundkörpers entlang einer Stapelrichtung gestapelt bzw. geschichtet, wobei die Stapelrichtung insbesondere mit einer Längsachse des Elektromotors zusammenfallen kann.

Unter einer Längsachse wird hierin die Drehachse des Rotors verstanden.

Gemäß einer weiteren Ausführungsform kann das wärmeleitfähige Material, zumindest während der Herstellung, eine pastöse Konsistenz aufweisen, insbesondere kann das wärmeleitfähige Material, zumindest während der Herstellung, thixotrope Viskositätseigenschaften aufweisen.

Bei dem wärmeleitfähigen Material kann es sich beispielsweise um eine Wärmeleitpaste handeln.

Alternativ kann das wärmeleitfähige Material auch als aushärtbarer Klebstoff ausgebildet sein, was den Vorteil hat, dass nach dem Aushärten sowohl eine thermische Anbindung des Spulenträgers an den Grundkörper erreicht werden kann als auch eine sichere Verbindung der beiden Vorrichtungsbestandteile miteinander.

Das wärmeleitfähige Material kann eine fließfähige Matrix aufweisen, die mit wärmeleitfähigen Partikeln gefüllt ist, wobei die wärmeleitfähigen Partikel insbesondere elektrisch nicht leitfähig sein können. Besonders geeignete wärmeleitfähige Partikel umfassen Keramikpartikel, etwa aus Zinkoxid. Grundsätzlich ist es jedoch auch möglich, dass das wärmeleitfähige Material elektrisch leitfähig ist bzw. elektrisch leitfähige wärmeleitfähige Partikel umfasst, beispielsweise Aluminium-, Kupfer-, Graphit- und/oder Silberpartikel.

Wenn das wärmeleitfähige Material elektrisch leitfähig ist, müssen jedoch Luft- und Kriechstrecken beachtet werden. In diesem Fall ist die Anordnung bzw. der Auftrag des wärmeleitfähigen Materials vorzugsweise so zu gestalten, dass Sicherheitsabstände (z.B. die Kriechstrecke) zwischen angrenzenden elektrisch leitenden Vorrichtungsbestandteilen des Elektromotors nicht negativ beeinflusst werden.

Das wärmeleitfähige Material wird zur Herstellung des erfindungsgemäßen Elektromotors mit geeigneten Mitteln vor dem Wickeln der Spule(n) auf den Grundkörper bzw. den Spulenträger aufgetragen. Hierdurch kann eine besonders gut reproduzierbare thermische Anbindung zwischen Spulenträger und Grundkörper erreicht werden.

Es hat sich als besonders vorteilhaft erwiesen, wenn die Wärmeleitfähigkeit des wärmeleitfähigen Materials größer als 0,8 W/mK ist. In Ausführungen kann eine Wärmeleitfähigkeit des wärmeleitfähigen Materials zwischen 0,8 W/mK und 1,5 W/mK, insbesondere zwischen 1,0 W/mK und 1,5 W/mK, liegen.

Es kann bei der Verwendung von Spulenträgern, die nur eine geringe Wärmeleitfähigkeit aufweisen (≤ 0,8 W/mK) vorteilhaft sein, wenn das wärmeleitfähige Material eine Wärmeleitfähigkeit von 0,8 W/mK - 1,5 W/mK aufweist.

Besonders vorteilhaft ist eine Wärmeleitfähigkeit des wärmeleitfähigen Materials von 1,0 W/mK - 1,5 W/mK wenn der Spulenträger aus einem Kunststoff, beispielsweise einem Polyamid, hergestellt ist.

Gemäß einer Weiterbildung kann der Grundkörper zumindest einen Polschuh aufweisen, der einen Polzahn und insbesondere zumindest einen an den Polzahn angrenzenden Jochbereich umfasst, wobei die Spule auf den zumindest einen Polzahn aufgewickelt ist.

In Ausführungen kann der Grundkörper zumindest zwei Polschuhe umfassen, die in Umfangsrichtung verteilt angeordnet sind. In Weiterbildungen kann der Grundkörper auch drei, vier, fünf oder noch mehr Polschuhe aufweisen, die insbesondere in gleichmäßigen Winkelabständen zueinander angeordnet sind.

Es hat sich als vorteilhaft erwiesen, wenn das wärmeleitfähige Material zumindest in einem Bereich vorliegt, in dem die Spule unmittelbar auf dem Spulenträger aufliegt, insbesondere im Bereich des Polzahns. Insbesondere bei Polzähnen mit nicht kreisförmigem, beispielswiese rechteckförmigen, Querschnitt gibt es Bereiche, in denen die Stromleiter der Spule unmittelbar auf dem Spulenträger aufliegen und andere Bereiche, in denen die Stromleiter beabstandet zum Spulenträger sind. Insbesondere in Bereichen, in denen die Stromleiter der Spule unmittelbar auf dem Spulenträger aufliegen ergibt sich ein hohes Optimierungspotential. Indem in Bereichen, in denen die die Stromleiter beabstandet zu dem Spulenträger sind kein oder zumindest weniger wärmeleitfähiges Material angeordnet bzw. aufgetragen wird, ergibt sich ein Potential zur Einsparung von wärmeleitfähigem Material, sodass sich hierüber eine wirtschaftlich optimierte verbesserte Entwärmung der Spulen realisieren lässt. In Ausführungen kann das wärmeleitfähige Material jedoch auch in Bereichen angeordnet bzw. aufgebracht sein, die außerhalb der Bereiche liegen, in denen die Spule einen direkten Kontakt mit dem Spulenträger aufweist, was technisch eine noch weiter verbesserte Entwärmung bedeutet, jedoch Zusatzkosten verursacht, die nicht in einem vorteilhaften Verhältnis zum technischen Zusatznutzen stehen.

In Ausführungen kann das wärmeleitfähige Material alternativ oder zusätzlich auch in zumindest einem Jochbereich vorliegen. Auch hier ist es von Vorteil, wenn das wärmeleitfähige Material zumindest in einem Bereich vorliegt, in dem die Spule unmittelbar auf dem Spulenträger aufliegt. Bevorzugt liegt das wärmeleitfähige Material sowohl im Jochbereich als auch im Bereich des Polzahns vor.

Technisch besonders vorteilhaft ist es, wenn das wärmeleitfähige Material auf zumindest 20% einer Oberfläche des Grundkörpers vorliegt, an die angrenzend die Spule unmittelbar auf dem Spulenträger aufliegt.

Ein weiterer Aspekt der vorliegenden Erfindung betrifft einen Stator für einen erfindungsgemäßen Elektromotor. Der Stator weist zumindest eine Spule auf, die auf einen Grundkörper aufgewickelt ist, wobei zwischen dem Grundkörper und der Spule zumindest abschnittsweise ein Spulenträger angeordnet ist, der zumindest abschnittsweise eine direkte Anlage zumindest einer Teilmenge an Stromleitern der Spule auf dem Grundkörper unterbindet. Zwischen dem Spulenträger und dem Grundkörper liegt zumindest abschnittsweise ein wärmeleitfähiges Material vor. Bei dem Grundkörper handelt es sich insbesondere um einen innengenuteten Grundkörper, d.h. einen Grundkörper, der an seinem Innenumfang Nuten aufweist. Zur Bildung der Spule wird ein Stromleiter am Innenumfang des Grundkörpers in die Nuten gewickelt.

Ein weiterer Aspekt der vorliegenden Erfindung betrifft einen Rotor für einen erfindungsgemäßen Elektromotor. Der Rotor weist zumindest eine Spule auf, die auf einen Grundkörper aufgewickelt ist, wobei zwischen dem Grundkörper und der Spule zumindest abschnittsweise ein Spulenträger angeordnet ist, der zumindest abschnittsweise eine direkte Anlage zumindest einer Teilmenge an Stromleitern der Spule auf dem Grundkörper unterbindet. Zwischen dem Spulenträger und dem Grundkörper liegt zumindest abschnittsweise ein wärmeleitfähiges Material vor. Bei dem Grundkörper handelt es sich insbesondere um einen außengenuteten Grundkörper, d.h. einen Grundkörper, der an seinem Außenumfang Nuten aufweist. Zur Bildung der Spule wird ein Stromleiter am Außenumfang des Grundkörpers in die Nuten gewickelt.

Alle bezüglich des Erfindungsgegenstands "Elektromotor" offenbarten Merkmale und Merkmalskombinationen sowie deren spezifischen technischen Vorteile sind auf die Erfindungsgegenstände "Stator" und "Rotor" übertragbar und umgekehrt.

Schließlich betrifft ein weiterer Aspekt der vorliegenden Erfindung ein Herstellverfahren für einen erfindungsgemäßen Rotor oder Stator.

Das Verfahren umfasst die folgenden Schritte:
a) Bereitstellen eines Grundkörper und eines Spulenträgers;
b) Aufbringen eines wärmeleitfähigen Materials auf den Grundkörper oder den Spulenträger;
c) Verbinden des Spulenträgers mit dem Grundkörper;
d) Bereitstellen zumindest eines Stromleiters;
e) auf den Spulenträger Wickeln des Stromleiters um eine Spule zu bilden.

In Ausführungen kann Schritt b) vor oder während Schritt c) ausgeführt werden.

Vor dem Bereitstellen des Grundkörpers in Schritt a) kann der Grundkörper als Vorbereitungsschritt aus einer Mehrzahl an gestapelten Einzellagen, insbesondere Blechstücken, zusammengesetzt werden. Bei dem in Schritt a) bereitgestellten Grundkörper kann es sich daher insbesondere um ein Blechpaket handeln, wobei die Einzellagen bzw. -bleche durch Stanzpakettieren oder Schweißen verbunden sein können.

Bevorzugt wird das wärmeleitfähige Material in Schritt b) auf den Grundkörper aufgebracht, da dies prozesssicherer umzusetzen ist.

Das wärmeleitfähige Material kann zumindest in einem Bereich auf den Grundkörper aufgebracht werden, in dem die Spule nach dem Wickeln unmittelbar auf dem Spulenträger aufliegt, insbesondere im Bereich zumindest eines Polzahns.

In Ausführungen kann das wärmeleitfähige Material alternativ oder zusätzlich auch in zumindest einem Jochbereich auf den Grundkörper aufgebracht werden. Auch hier ist es von Vorteil, wenn das wärmeleitfähige Material zumindest in einem Bereich aufgebracht wird, in dem die Spule nach den Wickeln unmittelbar auf dem Spulenträger aufliegt. Bevorzugt wird das wärmeleitfähige Material sowohl im Jochbereich als auch im Bereich des Polzahns aufgebracht.

Vorteilhafterweise wird das wärmeleitfähige Material auf zumindest 20% einer Oberfläche des Grundkörpers aufgebracht, an die angrenzend die Spule nach dem Wickeln unmittelbar auf dem Spulenträger aufliegt.

Gemäß einer Weiterbildung des Verfahrens wird das wärmeleitfähige Material in fließfähiger, insbesondere pastöser, Form auf den Grundkörper aufgebracht, wobei beim Wickeln des Stromleiters das in fließfähiger Form bereitgestellte wärmeleitfähige Material verteilt wird. Hierbei ist es von Vorteil, wenn das fließfähige, insbesondere pastöse, wärmeleitfähige Material thixotrope Viskositätseigenschaften aufweist, sodass dessen Viskosität unter Scherung herabgesetzt wird. Durch die beim Wickeln auftretenden Scherkräfte kann dadurch eine Verteilung des wärmeleitfähigen Materials an der Schnittstelle zwischen Spulenträger und Grundkörper verbessert werden.

Es kann in Ausführungen vorgesehen sein, dass das wärmeleitfähige Material in Form einer vergleichsweise dünnen Spur bzw. Raupe auf den Grundkörper aufgetragen wird und erst durch den Wickelvorgang des Stromleiters flächig verteilt wird. Insbesondere bei einem statistischen bzw. "wilden" Wickeln der Spule ausgehend vom Polzahn kann das als Spur bzw. Raupe aufgetragene wärmeleitfähige Material durch die vom Stromleiter auf den Spulenträger übertragenen Wickelkräfte verteilt werden, da diese das wärmeleitfähige Material gewissermaßen vor sich her schieben.

Bei dem wärmeleitfähigen Material kann es sich beispielsweise um eine Wärmeleitpaste handeln. Alternativ kann das wärmeleitfähige Material auch als aushärtbarer Klebstoff ausgebildet sein, was den Vorteil hat, dass sowohl eine thermische Anbindung des Spulenträgers an den Grundkörper erreicht werden kann als auch eine sichere Verbindung der beiden Vorrichtungsbestandteile miteinander.

In Ausführungen kann das Aufbringen des wärmeleitfähigen Materials in fließfähiger, insbesondere pastöser, Form auf den Grundkörper durch Sprühen, mittels einer Dosierlanze und/oder Drucken, insbesondere Tampondruck, erfolgen.

### KURZE BESCHREIBUNG DER FIGUREN

Die nachfolgende Beschreibung erläutert die Erfindung anhand von exemplarischen Ausführungsformen und Figuren.

In den Figuren zeigen:
- Fig. 1: eine isometrische Ansicht eines Elektromotors;
- Fig. 2: eine isometrische Ansicht eines Stators;
- Fig. 3: eine Querschnittsansicht des Stators der Fig. 2;
- Fig. 4a: eine Draufsicht eines Teils einer Einzellage eines Grundkörpers des Stators der Fig. 2;
- Fig. 4b: Detail A gemäß Fig. 4a;
- Fig. 5: eine isometrische Ansicht eines Rotors;
- Fig. 6: eine Querschnittsansicht des Rotors der Fig. 5;
- Fig. 7: Detail B gemäß Fig. 6; und
- Fig. 8: ein Ablaufdiagramm des Herstellverfahrens.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

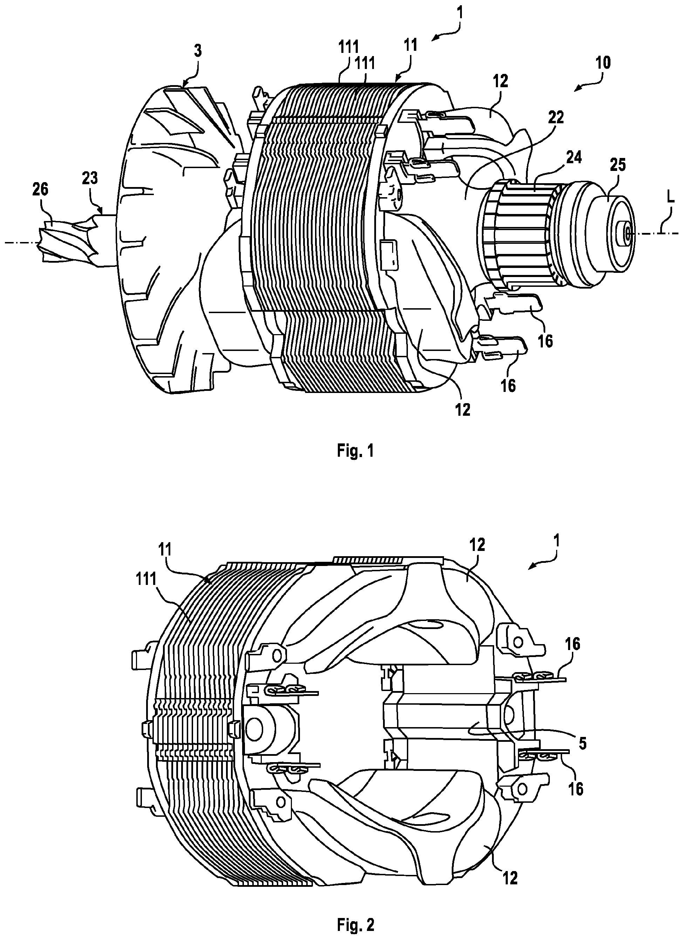

Der in **Fig. 1** in einer isometrischen Ansicht gezeigte erfindungsgemäße Elektromotor 10 umfasst einen Stator 1 sowie einen Rotor 2. Der Rotor 2 ist in dem Stator 1 aufgenommen und umfasst eine Rotorwelle 23, die an ihrer Abtriebsseite 26 mit einer Zahnung versehen ist. Die Rotorwelle 23 ist drehfestmit einem Lüfterrad 3 verbunden, das im Betrieb einen Luftstrom zur Kühlung des Rotors 2 und des Stators 1 bereitstellt. Die Rotorwelle 23 ist im Betrieb des Elektromotors 10 um die Längsachse L rotierbar. Die Rotorwelle 23 ist in einem Rotorwellenlager 25 drehbar gelagert und weist einen Kommutator 24 auf, über den elektrische Energie eingespeist und den Spulen 22 des Rotors 2 zur Verfügung gestellt werden kann. Der Stator 1 umfasst ebenfalls Spulen 12, die über Anschlussklemmen 16 mit elektrischer Energie versorgt werden können.

Der erfindungsgemäße Elektromotor 10 ist insbesondere für Werkzeugmaschinen, genauer für handgeführte Elektrowerkzeuge, geeignet. Beispielsweise kann der erfindungsgemäße Elektromotor 10 in Bohrmaschinen, Bohrhämmern, Säbelsägen, Kreissägen, Stichsägen, Kernbohrgeräten, Abbruchhämmern sowie Press-, Crimp- und/oder Schneidewerkzeugen eingesetzt werden.

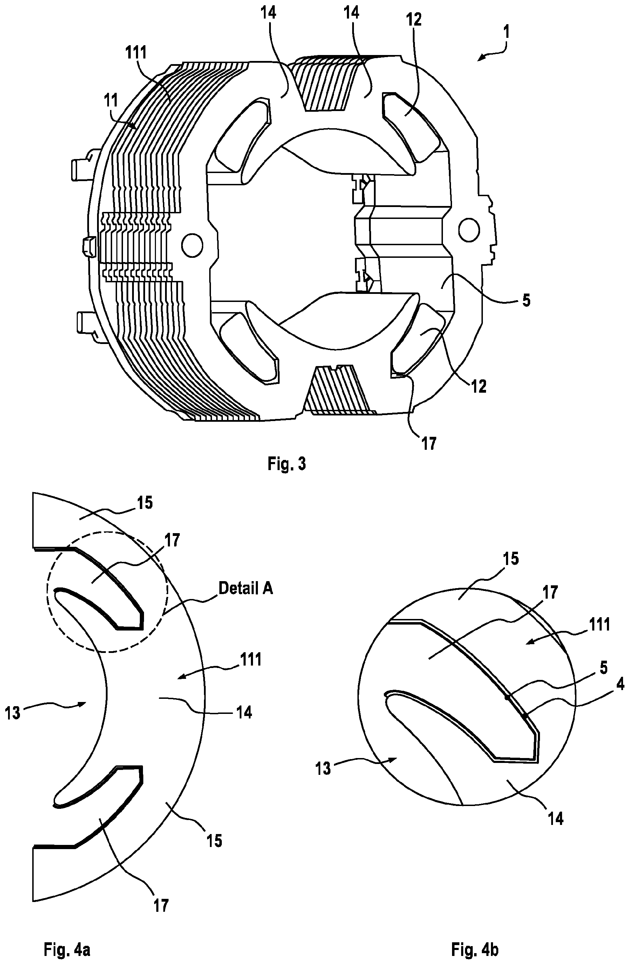

Der Stator 1 weist einen innengenuteten Grundkörper 11 auf, der Nuten 17 (siehe Fig.3) umfasst, in die ein Stromleiter zur Bildung der Spulen 12 des Stators 1 gewickelt ist. Der Grundkörper 11 weist ein magnetisch wirksames Material, insbesondere ein Metall oder eine Metalllegierung, insbesondere eine Eisenbasislegierung, auf oder besteht daraus. Der Grundkörper 11 umfasst eine Mehrzahl an gestapelten Einzellagen 111, insbesondere Blechstücke 111, die ein Blechpaket bilden und miteinander durch Stanzpakettieren oder Schweißen verbunden sind. Die Einzellagen 111 bzw. Blechstücke 111 sind zur Bildung des Grundkörpers 11 entlang einer Stapelrichtung gestapelt bzw. geschichtet, die mit der Längsachse L des Elektromotors 10 zusammenfällt.

In **Fig. 2** ist ein erfindungsgemäßer Stator 1 in einer isometrischen Ansicht gezeigt, wobei hier zusätzlich ein Spulenträger 5 zu erkennen ist, der im Bereich der Nuten 17 des Grundkörpers 11 zwischen dem Grundkörper 11 und der Spule 12 angeordnet ist und zumindest abschnittsweise eine direkte Anlage zumindest einer Teilmenge an Stromleitern der Spule 12 auf dem Grundkörper 11 unterbindet. Der Spulenträger 5 kann insbesondere aus einem elektrisch nicht leitfähigen Material, beispielsweise einem Polyamid, einer Kunststofffolie oder einem zellulosebasierten Material, bestehen.

In der in **Fig. 3** gezeigten Querschnittsansicht des Stators 1 ist der innere Aufbau nun deutlicher zu erkennen. Der Grundkörper 11 des Stators 1 umfasst zwei Polschuhe 13, die in einem Winkelabstand von 180° beabstandet zueinander angeordnet sind. Die Polschuhe 13 umfassen jeweils zwei Polzähne 14, auf die die Stromleiter der Spule 12 gewickelt sind. Jeweils ein Polschuh 13 und ein Polzahn 14 bilden zwei Nuten 17 aus, in dem die Wicklungen der Spule 12 aufgenommen sind. Der Bereich der Nut 17 ist von dem Spulenträger 5 ausgekleidet, sodass die Stromleiter der Spule 12 nicht unmittelbar auf dem Grundkörper 11 anliegen, sondern auf dem Spulenträger 5.

In **Fig. 4a** und **Fig. 4b** ist eine schematische Detailansicht einer Einzellage 111 bzw. -blechs 111 eines Grundkörpers 11 eines Stators 1 im Bereich der Nuten 17 gezeigt. Hierbei ist zu erkennen, dass erfindungsgemäß zwischen dem Spulenträger 5 und dem Grundkörper 11 zumindest abschnittsweise ein wärmeleitfähiges Material 4 vorliegt. Das wärmeleitfähige Material 4 bildet eine wärmeleitende Schicht zwischen dem Spulenträger 5 und dem Grundkörper 11 aus, die Wärmeübergangswiderstände zwischen dem Spulenträger 5 und dem Grundkörper 11 minimiert. Die durch das wärmeleitfähige Material 4 gebildete wärmeleitende Schicht ist vorteilhafterweise zumindest in einem Bereich vorhanden, in dem die Stromleiter der Spule 12 auf dem Spulenträger 5 aufliegen bzw. diesen berühren. Insbesondere liegt das wärmeleitfähige Material 4 vor allem in einem an den Polzahn 14 angrenzenden Bereich der Nut 17 vor. Es kann jedoch auch im Jochbereich 15 vorliegen. Eine besonders gute Verbesserung der Entwärmung der Spulen 12 ist erreichbar, wenn das wärmeleitfähige Material 4 eine höhere Wärmeleitfähigkeit als der Spulenträger 5 aufweist. Die Wärmeleitfähigkeit des wärmeleitfähigen Materials 4 kann größer als 0,8 W/mK sein. In Ausführungen kann eine Wärmeleitfähigkeit des wärmeleitfähigen Materials 4 zwischen 0,8 W/mK und 1,5 W/mK, insbesondere zwischen 1,0 W/mK und 1,5 W/mK, liegen.

Bei der Herstellung des Stators 1 wird das wärmeleitfähige Material 4 in fließfähiger, insbesondere pastöser, Form auf den Grundkörper 11 aufgebracht, was vor oder während des Einsetzens des Spulenträgers 5 erfolgen kann. Beim Wickeln des Stromleiters der Spule 12 wird das sich in fließfähiger Form befindliche wärmeleitfähige Material 4 dann in der Nut 17 verteilt. Es kann hierbei ausreichend sein, wenn das wärmeleitfähige Material 4 in Form einer vergleichsweise dünnen Spur bzw. Raupe im Bereich des Polzahns 14 auf den Grundkörper aufgetragen wird und erst durch den Wickelvorgang des Stromleiters flächig in der Nut 17 verteilt wird.

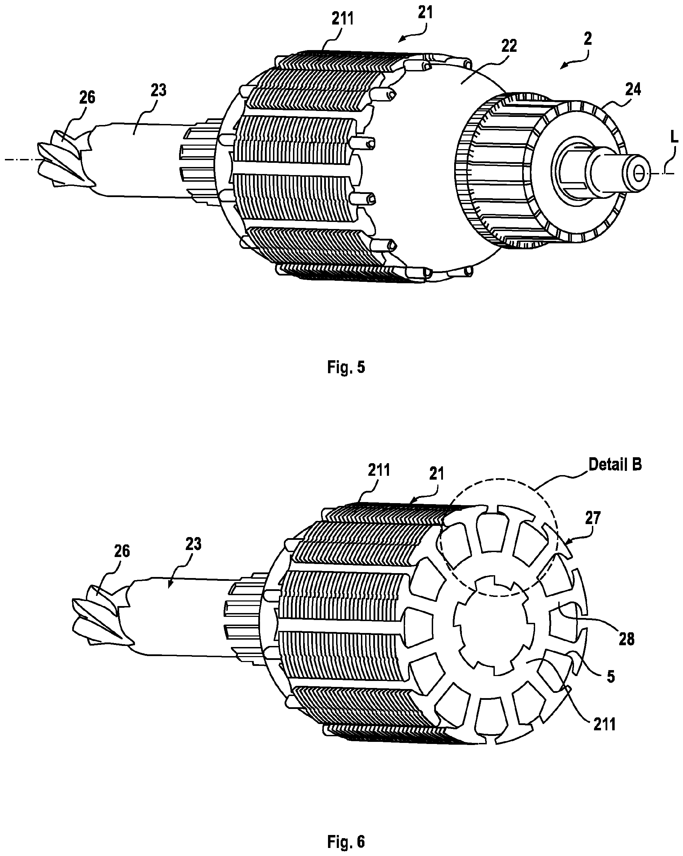

In Fig. 5 ist ein erfindungsgemäßer Rotor 2 in einer isometrischen Ansicht gezeigt, wobei hier zusätzlich zur Fig. 1 der Grundkörper 21 aus einem magnetisch wirksamen Material, insbesondere aus Metall oder einer Metalllegierung, insbesondere einer Eisenbasislegierung, zu erkennen ist. Der Grundkörper 21 umfasst eine Mehrzahl an gestapelten Einzellagen 211, insbesondere Blechstücke 211, die ein Blechpaket bilden und miteinander durch Stanzpakettieren oder Schweißen verbunden sind. Die Einzellagen 211 bzw. Blechstücke 211 sind zur Bildung des Grundkörpers 21 entlang einer Stapelrichtung gestapelt bzw. geschichtet, die mit der Längsachse L des Elektromotors 10 zusammenfällt.

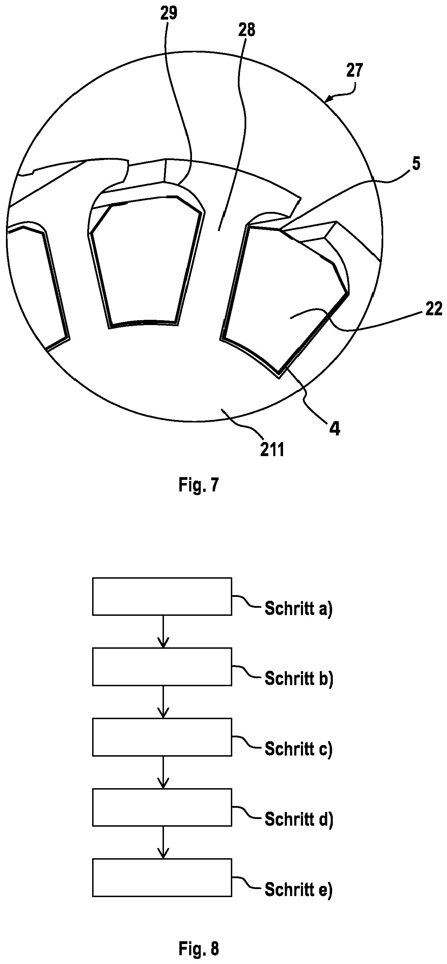

Der Grundkörper 21 des Rotors 2 ist außengenutet und umfasst an seinem Außenumfang Nuten 29 (siehe Fig. 7), in die ein Stromleiter zur Bildung der Spulen 22 des Rotors 2 gewickelt ist.

In der in **Fig. 6** gezeigten Querschnittsansicht des Rotors 2 ist der innere Aufbau nun deutlicher zu erkennen. Der Grundkörper 21 des Rotors 2 umfasst eine Mehrzahl Polschuhe 27, die in gleichmäßigen Winkelabständen zueinander angeordnet sind. Die Polschuhe 27 umfassen jeweils einen Polzahn 28, auf den die Stromleiter der Spule 22 gewickelt sind. Jeweils zwei benachbarte Polzähne 28 bilden eine Nut 29 aus, in der die Wicklungen der Spule 22 aufgenommen sind. Der Bereich der Nut 29 ist von einem Spulenträger 5 ausgekleidet, sodass die Stromleiter der Spule 22 nicht unmittelbar auf dem Grundkörper 21 anliegen, sondern auf dem Spulenträger 5.

In **Fig. 7** ist eine Detailansicht einer Einzellage 211 bzw. -blechs 211 als Detail B der Fig. 6 dargestellt, wobei der Bereich zweier Nuten 29 gut zu sehen ist. Hierbei ist zu erkennen, dass erfindungsgemäß zwischen dem Spulenträger 5 und dem Grundkörper 21 zumindest abschnittsweise ein wärmeleitfähiges Material 4 vorliegt. Das wärmeleitfähige Material 4 bildet eine wärmeleitende Schicht zwischen dem Spulenträger 5 und dem Grundkörper 21 aus, die Wärmeübergangswiderstände zwischen dem Spulenträger 5 und dem Grundkörper 21 minimiert. Die durch das wärmeleitfähige Material 4 gebildete wärmeleitende Schicht ist vorteilhafterweise zumindest in einem Bereich vorhanden, in dem die Stromleiter der Spule 12 auf dem Spulenträger 5 aufliegen bzw. diesen berühren. Insbesondere liegt das wärmeleitfähige Material 4 vor allem in einem an den Polzahn 28 angrenzenden Bereich der Nut 29 vor.

In dem Ablaufdiagramm der **Fig. 8** ist eine Ausführungsform des erfindungsgemäßen Herstellverfahrens dargestellt, welches die folgenden Schritte umfasst:
a) Bereitstellen eines Grundkörpers (11,21) und eines Spulenträgers (5);
b) Aufbringen eines wärmeleitfähigen Materials (4) auf den Grundkörper (11,21) oder den Spulenträger (5);
c) Verbinden des Spulenträgers (5) mit dem Grundkörper (11,21);
d) Bereitstellen zumindest eines Stromleiters;
e) auf den Spulenträger (5) Wickeln des Stromleiters um eine Spule (12,22) zu bilden.

### BEZUGSZEICHENLISTE

- 1: Stator
- 10: Elektromotor
- 11: Grundkörper des Stators
- 111: Einzellagen / Bleche des Grundkörpers des Stators
- 12: Spule des Stators
- 13: Polschuh des Grundkörpers des Stators
- 14: Polzahn des Grundkörpers des Stators
- 15: Jochbereich des Grundkörpers des Stators
- 16: Anschlussklemmen
- 17: Nuten des Grundkörpers des Stators
- 2: Rotor
- 21: Grundkörper
- 211: Einzellagen / Bleche des Grundkörpers des Rotors
- 22: Spule des Rotors
- 23: Rotorwelle
- 24: Kommutator
- 25: Rotorwellenlager
- 26: Abtriebsseite der Rotorwelle
- 27: Polschuh des Grundkörpers des Rotors
- 28: Polzahn des Grundkörpers des Rotors
- 29: Nuten des Grundkörpers des Rotors
- 3: Lüfterrad
- 4: wärmeleitfähiges Material
- 5: Spulenträger
- L: Längsachse

## Patentansprüche

1. Elektromotor (10), insbesondere für eine Werkzeugmaschine, umfassend einen Stator (1) und einen Rotor (2), wobei der Stator (1) und/oder der Rotor (2) zumindest eine Spule (12,22) aufweist, die auf einen Grundkörper (11,21) aufgewickelt ist, wobei zwischen dem Grundkörper (11,21) und der Spule (12,22) zumindest abschnittsweise ein Spulenträger (5) angeordnet ist, der zumindest abschnittsweise eine direkte Anlage zumindest einer Teilmenge an Stromleitern der Spule (12,22) auf dem Grundkörper (11,21) unterbindet,
**dadurch gekennzeichnet, dass**
zwischen dem Spulenträger (5) und dem Grundkörper (11,21) zumindest abschnittsweise ein wärmeleitfähiges Material (4) vorliegt.

2. Elektromotor (10) nach Anspruch 1, wobei der Grundkörper (11,21) ein magnetisch wirksames Material, insbesondere ein Metall oder eine Metalllegierung, insbesondere eine Eisenbasislegierung, aufweist oder daraus besteht.

3. Elektromotor (10) nach Anspruch 1 oder 2, wobei der Grundkörper (11,21) eine Mehrzahl an gestapelten Einzellagen (111,211), insbesondere Blechstücke, umfasst, die insbesondere ein Blechpaket bilden.

4. Elektromotor (10) nach einem der vorigen Ansprüche, wobei das wärmeleitfähige Material (4) eine pastöse Konsistenz aufweist, insbesondere wobei das wärmeleitfähige Material thixotrop ist.

5. Elektromotor (10) nach einem der vorigen Ansprüche, wobei eine Wärmeleitfähigkeit des wärmeleitfähigen Materials (4) größer als 0,8 W/mK ist, insbesondere wobei eine Wärmeleitfähigkeit des wärmeleitfähigen Materials (4) zwischen 0,8 W/mK und 1,5 W/mK liegt, insbesondere wobei eine Wärmeleitfähigkeit des wärmeleitfähigen Materials (4) zwischen 1,0 W/mK und 1,5 W/mK liegt.

6. Elektromotor (10) nach einem der vorigen Ansprüche, wobei der Grundkörper (11,21) zumindest einen Polschuh (13,27) aufweist, der einen Polzahn (14,28) und insbesondere zumindest einen an den Polzahn (14,28) angrenzenden Jochbereich (15) umfasst, wobei die Spule (12,22) auf den zumindest einen Polzahn (14,28) aufgewickelt ist.

7. Elektromotor (10) nach einem der vorigen Ansprüche, wobei das wärmeleitfähige Material (4) zumindest in einem Bereich vorliegt, in dem die Spule (12,22) unmittelbar auf dem Spulenträger (5) aufliegt, insbesondere im Bereich des Polzahns (14,28).

8. Elektromotor (10) nach Anspruch 6 oder 7, wobei das wärmeleitfähige Material (4) in dem zumindest einem Jochbereich (15) vorliegt.

9. Elektromotor (10) nach einem der vorigen Ansprüche, wobei das wärmeleitfähige Material (4) auf zumindest 20% einer Oberfläche des Grundkörpers (11,21) vorliegt, an die angrenzend die Spule (12,22) unmittelbar auf dem Spulenträger (5) aufliegt.

10. Stator (1) für einen Elektromotor (10) nach einem der vorigen Ansprüche, der zumindest eine Spule (12) aufweist, die auf einen Grundkörper (11) aufgewickelt ist, wobei zwischen dem Grundkörper (11) und der Spule (12) zumindest abschnittsweise ein Spulenträger (5) angeordnet ist, der zumindest abschnittsweise eine direkte Anlage zumindest einer Teilmenge an Stromleitern der Spule (12) auf dem Grundkörper (11) unterbindet, wobei zwischen dem Spulenträger (5) und dem Grundkörper (11) zumindest abschnittsweise ein wärmeleitfähiges Material (4) vorliegt.

11. Rotor (2) für einen Elektromotor (10) nach einem der vorigen Ansprüche, der zumindest eine Spule (22) aufweist, die auf einen Grundkörper (21) aufgewickelt ist, wobei zwischen dem Grundkörper (21) und der Spule (22) zumindest abschnittsweise ein Spulenträger (5) angeordnet ist, der zumindest abschnittsweise eine direkte Anlage zumindest einer Teilmenge an Stromleitern der Spule (22) auf dem Grundkörper (21) unterbindet, wobei zwischen dem Spulenträger (5) und dem Grundkörper (21) zumindest abschnittsweise ein wärmeleitfähiges Material (4) vorliegt.

12. Herstellverfahren für einen Stator (1) nach Anspruch 10 oder einen Rotor (2) nach Anspruch 11, umfassend die Schritte:
a) Bereitstellen eines Grundkörpers (11,21) und eines Spulenträgers (5);
b) Aufbringen eines wärmeleitfähigen Materials (4) auf den Grundkörper (11,21) oder den Spulenträger (5);
c) Verbinden des Spulenträgers (5) mit dem Grundkörper (11,21);
d) Bereitstellen zumindest eines Stromleiters;
e) auf den Spulenträger (5) Wickeln des Stromleiters um eine Spule (12,22) zu bilden.

13. Herstellverfahren nach Anspruch 12, wobei das wärmeleitfähige Material (4) in fließfähiger, insbesondere pastöser, Form auf den Grundkörper (11,21) aufgebracht wird und wobei beim Wickeln des Stromleiters das in fließfähiger Form bereitgestellte wärmeleitfähige Material (4) verteilt wird.

14. Herstellverfahren nach Anspruch 13, wobei das Aufbringen des wärmeleitfähigen Materials (4) in fließfähiger, insbesondere pastöser, Form auf den Grundkörper (11,21) durch Sprühen, mittels einer Dosierlanze und/oder Drucken, insbesondere Tampondruck, erfolgt.
